(19)

Europäisches
Patentamt
European
Patent Office
Office européen
des brevets

(11)  **EP 2 228 325 A1**

(12)  # EUROPEAN PATENT APPLICATION

(43) Date of publication:
**15.09.2010 Bulletin 2010/37**

(51) Int Cl.:
*B65G 15/34* [(2006.01)]  *C08L 23/16* [(2006.01)]

(21) Application number: **09155128.3**

(22) Date of filing: **13.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Habasit AG
4153 Reinach (CH)**

(72) Inventor: **Wright, Marshall
4244, Röschenz (CH)**

(74) Representative: **Bohest AG
Postfach 160
4003 Basel (CH)**

(54)  **Belt comprising a layer of foamed soft thermoplastic elastomer**

(57)  A belt comprising a foamed layer (1, 3, 6, 17, 23), **characterised in that** this foamed layer (1, 3, 6, 17, 23) contains a foam of a thermoplastic elastomer which in the unfoamed state has a Shore A hardness of at the most 85. The thermoplastic elastomer may in particular be a substantially random ethylene $/C_{3-12}$-$\alpha$-olefin copolymer, optionally blended with a compatible thermoplastic; a thermoplastic elastomeric block copolymer; a blend of thermoplastics and elastomers; an alloy of thermoplastics and elastomers; or a thermoplastic elastomeric ionomer. The belt may in particular be a conveyor belt, a transport belt, a treadmill belt or a printing blanket.

# Fig. 1

**Description**

The present invention concerns belts with foamed layers.

Soft belts are customarily made on the one hand of a PVC containing a plasticizer such as phthalates. This brings about the problems of leaching of the plasticizer out of the PVC and its potential toxicity. On the other hand soft belts have been made from rubbers. These have good physical properties but have the disadvantage of a relatively high cost.

WO 2008/113195 discloses a treadmill belt, which may have an intermediate layer, or top layer, which may be of a thermoplastic foam.

US 5,332,080 discloses an apparatus for conveying glass panes, the apparatus having an endless conveying element having supporting surfaces for the glass panes which may be made of a plastic or elastomer of Shore A hardness between 15 and 50, preferably between 30 and 40, and which may be a foamed polyurethane having Shore A hardness of about 40, i.e. after foaming.

The present invention has the task to provide an improved soft belt.

This task is solved according to the present invention by a belt comprising a foamed layer, **characterised in that** this foamed layer contains a foam of a thermoplastic elastomer, which in the unfoamed state has a Shore A hardness of at the most 85. Preferred embodiments of the present invention will be apparent from the dependent claims.

By the term "belt" is understood in the context of the present invention in particular a conveyor belt, a transport belt, a treadmill belt or a printing blanket.

The thermoplastic elastomers useful for the instant invention have a Shore A hardness of at the most 85 before foaming. Preferably they have a Shore A hardness of about 40 to about 70 and more preferably of about 50 to about 60.

These Shore A hardness boundary or range values are understood in the context of the invention as the hardness of the thermoplastic elastomeric material, including any possible fillers and additives admixed thereto, but in the unfoamed state. In order to do so a specimen of the layer of the belt to be analysed is separated from the belt. If the layer is already foamed then it is re-melted to remove foam bubbles and gas and the melt re-solidified to form a solid, unfoamed layer of suitable thickness, which should be a minimum of 6.4 mm, and polished to form a flat surface thereupon, if necessary. The hardness measurement is done using a hardened steel rod of 1.1 mm diameter, with a truncated 35° cone of 0.79 mm diameter, and using a pressure of 0.822 kg (8.064 Newton) for 15 seconds.

Exemplary thermoplastic elastomers with such Shore A hardness can be divided into several classes:

    1) Substantially random ethylene/$C_{3-12}$-$\alpha$-olefin co-polymers. Examples of the $\alpha$-olefins are 1-propene, 1-butene, 1-pentene, 1-hexene and 1-octene; the most preferred being 1-octene. These copolymers can be produced by so-called "single-site" catalysts in combination with polymeric methyl aluminoxane [MAO, -(Me-Al-O)n-] as co-catalyst. Preferred examples of such catalysts are the "single-site" catalysts from Dow Chemicals known under the name INSITE™ and those from Exxon Mobil Chemicals known under the name EXXPOL®. Examples of thermoplastic elastomeric ethylene/$\alpha$-olefin copolymers are the Affinit™, Engage® and Versify™ copolymer families (Dow) or the Exact™ copolymer family (DEX-Plastomers). One or more of these random copolymers may optionally be blended with a compatible thermoplastic polyamide (TPA) or thermoplastic polyurethane (TPU) and/or with a compatible thermoplastic polyolefin (TPO, such as polyethylene or polypropylene). Example for such later binary, ternary or higher-order blends are the Versalloy™ and Versollan™ blends (GLS corporation).

2) Thermoplastic elastomeric block copolymers. A first subgroup within these are block copolymers of oligomers of styrene and of oligomers of other olefinic monomers, also called styrenic block copolymers (SBC's). Examples are styrene-butadiene-styrene (SBS), styrene-isoprene-styrene (SIS), styrene-ethylene/butylene-styrene (SEBS) and styrene-ethylene/propylene-styrene (SEPS) block copolymers. Specific examples thereof are the Styroflex® copolymer family (BASF) and the Kraton® copolymer family (Kraton). A second subgroup are copolymers of hard blocks of medium density polyethylene and of soft blocks of ethylene/$\alpha$-olefin copolymer, in particular of ethylene/1-octene copolymer, the latter as outlined under above 1). An example is the Infuse® family of copolymers (Dow). A third subgroup are TPE-U's, such as copolymers of polyester diols or polyether diols with diisocyanates, or TPE-U's based on polycarbonate. The polyester diol may be formed from adipic acid and butanediol; the polyether diol may be for example a polyaddition adduct of ethylene oxide and/or propylene oxide; and the diisocyanate may be in particular diphenylmethane 4,4'-diisocyanate. The TPE-U can also be a TPE-U based on polycarbonate. Examples here are the Pellethane® copolymer family (Dow Chemical). A fourth subgroup are TPE-E's such as the Arnitel® (DSM) and Hytrel® (DuPont) copolymer families. A fifth subgroup are TPE-A's. All these may optionally be blended with a compatible thermoplastic selected from those outlined below under 3).

3) Blends of thermoplastics and true (crosslinked or vulcanized) elastomers, wherein the elastomer is miscible with thermoplastic in its molten state, or is dispersible therein. Examples for the thermoplastics in these blends include, but are not limited to: thermoplastic PA's such as PA 6, PA 11, PA 12, PA 66, PA 69, PA 610, PA 612, PA 6T, PA 6-3-T, PA MXD6, PE's such as for example PET or PBT, TPU's useful for producing soft foamed materials. Further examples of thermoplastics are TPO such as for example polyethylene or polypropylene; and homo- or copolymers of vinyl chloride, such as PVC and vinyl chloride/ethylene/vinyl acetate copolymers (VCEVAC). The elastomer in these blends has already been crosslinked using suited co-monomers, or already has been vulcanized, before mixing with the thermoplastic. Examples for the crosslinked or vulcanized elastomer in these blends include, but are not limited to, natural rubber, polyisoprene, polybutadiene, styrene-butadiene rubber (SBR), nitrile-butadiene rubber (NBR), ethylene-propylene-diene rubber (EPDM) and acrylate rubbers. Specific examples for the blends are blends of homo- or copolymers of vinyl chloride with elastomers, such as PVC/NBR or VCEVAC/NBR, the PVC homopolymer component in these being optionally softened with an appropriate softener (such as phthalates, e.g. dioctylphthalate, or esters of aliphatic dicarboxylic acids) in order to obtain the necessary Shore A hardness for the unfoamed blend; blends of polyethylene or polypropylene with EPDM, particularly polypropylene/EPDM blends with a mass fraction of about 35 to 45 % by weight, based on the blend, of polypropylene; and blends of thermoplastic polyamides with elastomers, such as PA6/EPDM, PA6/SBR, PA66/EPDM, PA66/SBR, PA11/EPDM, PA11/SBR, PA12/EPDM and PA12/SBR, the PA component in these being optionally softened with an appropriate softener (such as aromatic sulfonamides, e.g. N-butylbenzenesulfonamide) in order to obtain the necessary Shore A hardness for the unfoamed blend.

4) Thermoplastic elastomer alloys. These are similar to the blends exemplified under above 3), except that the elastomer is crosslinked in situ during the mixing with the molten thermoplastic, during which also some chemical bonding between elastomer and thermoplastic may occur. A first subgroup among these are thermoplastic vulcanizates (TPV's). Here, the crosslinkable elastomer is a vulcanizable elastomer containing olefinic unsaturations. Examples thereof are natural rubber, polyisoprene, polybutadiene, styrene-butadiene rubber (SBR), nitrile-butadiene rubber (NBR) and ethylene-propylene-diene rubber (EPDM). The vulcanization may be done during mixing with the thermoplastic using a suited curing agent such as sulfur, sulfur compounds or peroxides. The thermoplastic component for TPV's is preferably a saturated polyolefin, such as polyethylene or polypropylene. Examples are the Santoprene®, Geolast® (Monsanto) and Alcryn® (DuPont) alloys.

5) Thermoplastic elastomeric ionomers. These are preferably copolymers of an olefinic monomer (in particular ethylene) and an α,β-ethylenically unsaturated $C_{3-6}$carboxylic acid optionally with a co-polymerized softening olefinic monomer which may be selected from vinyl esters of saturated $C_{2-6}$-carboxylic acids (in particular vinylacetate) and $C_{1-4}$alkylvinyl ethers (in particular ethylvinyl ether), and wherein the carboxylates of the ionomer have at least partially been neutralised with metal ions derived from alkali metals (in particular from sodium), from zinc and from aluminium. An example is poly(ethylene-co-methacrylate), an example being the Surlyn® copolymer family (DuPont).

Preferably, if the thermoplastic elastomer is TPE-U, TPE-E or TPE-A then it is blended with a compatible thermoplastic. Alternatively and also preferably, the thermoplastic elastomer is neither a TPE-U nor a TPE-E nor a TPE-A nor comprises any of these.

The foamed layers, in particular the foamed cover layer, each contain a foamed thermoplastic elastomer which consists preferably of at least 50 percent by weight, more preferably of at least 75 percent by weight, even more preferably of at least 90 percent by weight and yet even more preferably at of least 95 percent by weight, based on the layer, of a thermoplastic elastomer as exemplified above, whereby the remainder of the layer being residual fractions of blowing agent, gas and optional further additives. Such additives are for example:

    a) auxiliaries to improve the properties of the finished products such as for example UV and heat stabilizers; flame retardants; colorants; antibacterial or mold-killing additives; and

    b) fillers as extenders to save plastics and thereby lower costs and/or for changing the electrical conductivity and dimensional stability and/or for reducing thermal expansion. In particular elongate or fibrous additives enhance strength.

The belt of the present invention may preferably include one or more traction layer(s), preferably exactly two traction layers, each preferably containing a textile fabric, embedded or encased in a plastic, or consisting solely of a textile fabric. This textile fabric can be either a woven fabric or a knit fabric (for example a drawn-loop knit fabric or a formed-loop knit fabric); alternatively, it can also be a nonwoven fabric such as for example a fibrous nonwoven web or a laid scrim. The fabric is preferably a woven fabric. Some more preferred configurations are woven fabrics made of multifilament warp with monofilament or with multifilament weft fibres; or fabrics made of staple warp with monofilament or multifilament weft fibres or with staple weft fibres. The most preferred configuration is staple or multifilament warp with monofilament weft. The preferred material for all types of fibres is polyester.

Preferably on the one hand the foamed thermoplastic elastomer layer forms the cover layer of the belt of the present invention, lying more preferably on the traction layer or, if two or more traction layers are provided, on the upper traction layer (when two traction layers are provided) or on the topmost traction layer (when more than two traction layers are provided). This foamed cover layer may optionally be provided on its top side with a profile, in order to make the belt useful for a belt running steeply inclined. These profiles can be applied by embossing for example. The topmost layer (the top layer or the covering layer) may optionally also have antistatic properties. The latter can be achieved, as customary in the art, by including conductive fibres or filaments into the textile fabric of the traction layer(s) and/or by admixing pulverulent, fibrous or fibrid-shaped electrically conductive materials (for example graphite, aluminum, silver, copper, nickel or polypyrrol) to the material of one of the other layers, such as the topmost layer.

Preferably on the other hand the belt of the invention comprises two traction layers (a lower traction layer and an upper traction layer) and the layer of foamed thermoplastic elastomer forms an intermediate layer in between these.

More preferably the belt of the invention comprises two traction layers (a lower traction layer and an upper traction layer) and two layers of a thermoplastic elastomer. One of these forms a cover layer and the other one forms an intermediate layer. At least one of the two layers of thermoplastic elastomer is foamed; preferably both of the thermoplastic elastomer layers are foamed.

The layers of the belt of the present invention are arranged on top of each other. This means in the context of the present invention that the layers are bonded together either directly, for example by heat and pressure, or by co-use of a customary adhesive. It is preferred that any cover layer made of a foamed thermoplastic elastomer be adhered to an underlying traction layer without the use of any adhesive layers, using the material of the cover layer and/or of any underlying thermoplastic or thermoplastic elastomeric layers, whether foamed or unfoamed, as the hotmelt adhesive. It is also preferred that any intermediate layer between two traction layers, made of a thermoplastic or thermoplastic elastomeric and foamed or unfoamed, be used as a hotmelt adhesive for adhering the intermediate layer to the two traction layers.

In order to achieve a direct bonding (i.e. without extra adhesive layers) between traction layers and the other layers lying atop of them or being arranged in between them it is preferred that the material pairs of adjoining layers be chosen appropriately. A particularly preferred material pairing is to use a polyester, in particular a spun polyester, for the fibres of the fabric of the traction layer(s) and to use a blend of a substantially random ethylene/$C_{3-12}$-$\alpha$-olefin copolymer of (in particular wherein the $C_{3-12}$-$\alpha$-olefin is 1-octene) and a thermoplastic polyamide (TPA) or thermoplastic polyurethane (TPU), optionally further blended with a compatible thermoplastic polyolefin (such as polyethylene or polypropylene).

The thicknesses of any layers containing a foamed thermoplastic elastomer is preferably in the range of 0.4 to 1.5 mm. For such a foamed cover layer the thickness is preferably in the range of 0.4 to 0.8 mm; and for such a foamed intermediate layer the thickness is preferably in the range of 0.7 to 1.5 mm. The overall thickness of the belt of the invention is preferably in the range of 2.5 to 5.5 mm, preferably in the range of 3.0 to 4.5 mm.

The thicknesses of the individual layers of the belt of the invention can be determined either on the belt itself or after its separation into the individual layers (cutting open, milling off or detaching of layers). However, it may happen that one of the layers does not have a geometrically sufficiently clear shape. In this case, instead of the geometric thickness, the thickness h can be determined as the quotient of the weight per unit area of the layer, $G_L$, (kg/m$^2$) and the mass-average density of all materials in the layer, p, (kg/m$^3$) :

$$h = \frac{G_L}{\rho} = \frac{G_L}{\dfrac{\sum\limits_{i=1}^{N} m_i \rho_i}{\sum\limits_{i=1}^{N} m_i}}$$

where $m_i$ is the amount of the i-th material of the layer (kg) and the summing is over all N materials occurring in the layer.

It is preferred for the foamed layers, in particular if it is a cover layer, that each of these consists of a thermoplastic elastomer foam having a degree of foaming in the range from about 5 to about 60 percent, preferably in the range from about 10 to about 40 percent. In the context of the present invention the "degree of foaming" defines the volume fraction the gas bubbles contribute to the overall volume of the thermoplastic elastomer foam. The degree of foaming is very simple to determine via a measurement of the densities in the foamed and unfoamed state:

$$r = \frac{(\rho_u - \rho_g)}{\rho_u} \times 100$$

In this formula, r is the degree of foaming in percent, $\rho_u$ is the density of the unfoamed thermoplastic elastomer as a homogeneous mixture with all further facultative additives such as for example dyes, and $\rho_g$ is the

density of an equal amount of the same thermoplastic elastomer mixture in the form of the blown foam.

All the foamed layers of the belt of the present invention can be produced by foaming a thermoplastic elastomeric material.

Foaming can firstly be carried out by direct admixture of a blowing agent to the thermoplastic elastomer material. The blowing agent may be a physical blowing agent. Examples of physical blowing agents are chlorofluorocarbons such as for example Frigen, Kaltron, Freon, Frigen, R11 and R12; hydrofluoroalkanes such as for example HFA 134 or HFA 227; and aliphatic linear, branched or cyclic ($C_4$-$C_8$)-hydrocarbons such as for example $C_5$-hydrocarbons (for example n-pentane, isopentane, neopentane, cyclopentane); $C_6$-hydrocarbons (for example n-hexane, isohexane, methylcyclopentane, cyclohexane), $C_7$-hydrocarbons (for example n-heptane, isoheptane, methylcyclohexane, cycloheptane) and $C_8$-hydrocarbons (for example octane, cyclooctane, isooctane, 1,2-, 1,3- or 1,4-dimethylcyclohexane). These hydrocarbons can be used in pure form or as hydrocarbon fractions of appropriately delimited boiling range, in which the respective hydrocarbons occur more or less dominantly (petroleum ether fractions). Further examples are blowing agents which are gaseous at room temperature, i.e. about 25°C, examples being $N_2$, $CO_2$, methane or argon; water; halogenated hydrocarbons such as for example dichloromethane, perchloroethylene and 1,1,1-trichloroethane; and low-boiling (i.e. boiling range about 60-100°C) alcohols such as for example methanol, ethanol, propanol, isopropanol and tert-butanol. On the other hand, the blowing agent may also be a chemical blowing agent; chemical blowing agents only release the blowing gas, in particular nitrogen or carbon dioxide, upon heating. Examples of useful chemical blowing agents are azo compounds, such as for example AIBN; hydrazine derivatives, such as for example benzenesulfonyl hydrazine; N-nitroso compounds; and easily decarboxylable carboxylic acids such as for example β-keto carboxylic acids. Physical blowing agents are preferred according to the present invention. The blowing agent is preferably selected such that it mixes very readily with the thermoplastic elastomer material to be foamed. This means that apolar thermoplastic elastomer materials, for example, an apolar blowing agent such as one of the above gaseous blowing agents or one of the above hydrocarbons or chlorofluorocarbons is used. On the other hand, water or one of the above alcohols can be used as a blowing agent for a more polar or hydrophilic thermoplastic elastomers. The amount of blowing agent is primarily determined by the desired degree of foaming. It may preferably be in the range from about 1 to about 10 percent by weight, based on the total amount of the thermoplastic elastomer to be foamed.

Foaming may secondly also be carried out by admixing so-called "expandable microspheres" to the thermoplastic elastomer material. Expandable microspheres have been known for a long time. They are formed by surrounding one of the above-exemplified, preferably physical blowing agents (in particular a water-insoluble blowing agent being liquid room temperature such as for example the abovementioned hydrocarbons, hydrofluoroalkanes or chlorofluorocarbons) by means of aqueous emulsion polymerization with a polymeric casing, for example of copolymer of acrylate/methacrylate and vinyl chloride. In the process, the blowing agent becomes encapsulated in the polymeric skin to form the said microspheres.

For the foaming it is preferred on the one hand that either the blowing agent be added in free form to the thermoplastic elastomer and the foaming be carried out using extrusion coating with simultaneous application to the supporting layer, such as one of the traction layers. It is preferred on the other hand to perform the foaming separately in an extruder, in which case the blowing agent is preferably added in the form of the abovementioned expandable microspheres and the foamed first layer thus obtained is subsequently applied in a second operation to the supporting layer by calendering.

The bonding together of foamed layers and traction layers can be done by calendering, extrusion coating or laminating. These methods are per se all known to the person skilled in the art.

In an alternative process for producing a belt of the present invention containing a layer of foamed thermoplastic elastomer comprising at least about 50% of blended thermoplastic PVC (as exemplified under the blends of above section 3), a dispersion of the PVC/elastomer blend in a plasticizer, also containing a blowing agent of the type and in amounts as described above, is prepared. Useful plasticizers include for example phthalate plasticizers (e.g. dioctyl phthalate, diisoheptyl phthalate, di-2-ethylhexyl phthalate, diisooctyl phthalate, dicyclohexyl phthalate, benzyl butyl phthalate or mixed diesters of phthalic acid with $C_6$-$C_{11}$-alkanols, where the alkanol may be primary or secondary); phosphoric acid esters (e.g., tri-2-ethylhexyl phosphate, triheptyl phosphate or tri-2-ethylpentyl phosphate) or low-viscosity (i.e., preferably ≤ 1000 mPa·s at room temperature) polyesters, obtainable from $C_3$-$C_9$-dicarboxylic acids (for example malonic acid, 1,4-butanedioic acid, 1,5-pentanedioic acid, adipic acid, azelaic acid, suberic acid or sebacic acid) and $C_3$-$C_8$-alkanediols (for example 1,2-propylene glycol, 1,3-propylene glycol, 1,4-butanediol). The dispersion may optionally have added to it further additives such as stabilizers, pigments or fillers. Such a dispersion, apart from the blowing agent additionally present, is comparable to the dispersions known in the art as plastisols. In the case of this beforehand-prepared dispersion the amount and type of plasticizers is chosen such that the dispersion has a pasty consistency. This dispersion is applied uniformly, for example with a doctor blade or by means of a coating roll, to the top side of a supporting layer, such as a traction layer, of the belt or intermediate compound, and the applied layer is foamed up to the desired degree of foaming by heating.

The belt of the present invention is preferably made endless. The belt can be made endless, for example, by direct welding, or by using the material of the foamed layer(s) as a hot-melt adhesive for bonding together, in which case optionally an additional adhesive, for example an additional hot-melt adhesive, may be co-used. Preferred is the welding or adhering without co-use of an additional adhesive. In these two preferred cases, the joint formed as the two ends are joined together consists of the same material as the thermoplastic elastomer foam. To obtain this endless belt, a layered composite which already includes all required layers (as described above) is, if necessary, firstly cut to a suitable length. The ends thus obtained can then be end-joined using any end joints known in the field of conveyor belts, examples being finger joints, wedge joints, overlap joints and step joints.

By the foaming the apparent softness of the thermoplastic elastomer is reduced even further than what would be expected by the mere density reduction due to the foaming, which density reduction is used in the above described calculation of the degree of foaming. This in turn reduces the longitudinal stiffness of the belt of the invention, the energy requirement and the weight per unit thickness, and at the same time compensates for the relatively high cost of the thermoplastic elastomer. Application of a foamed thermoplastic elastomer layer onto either the belt surface as a cover layer to provide a cushioning effect, or inclusion of such a foamed intermediate layer between its two traction layers, allows compression of the intermediate layer during flexing, thereby reducing stress on the cover layer (whether foamed or not) and increasing longitudinal flexibility of the belt of the invention, which in turn leads to reduced energy consumption to drive the belt. Incorporation of both a cover layer and an intermediate layer of a foamed thermoplastic elastomer gives a combination of both properties. The degree of longitudinal flexibility is surprising considering the relatively high belt thickness. The belt of the invention can withstand even nosebar application, such as at a pulley/nosebar of down to 14 mm, without cracking and without separation of the layers. This is not possible with conventional PVC and rubber belt constructions of similar thickness which are insufficiently flexible. The exceptional lengthwise flexibility combined with low density allows a relatively high belt thickness and this in turn gives high lateral rigidity, which in turn allows for a very stable running of the belt. This implies that it should be possible to make thicker belts still capable of negotiating small diameters, thereby increasing lateral stiffness. These belts should not appear "flimsy" as do prior art "soft" belts.

In the following the belt of the present invention and its production will now be described more in detail by means of illustrative embodiments with reference to the accompanying figures, of which

figures 1,2     show two versions of the belt of the present invention;

figure 3     shows a schematic view of an extruder useful for the production of the thermoplastic elastomer foams;

figure 4     shows schematically the production of a belt of the present invention from an intermediate layer of foamed thermoplastic elastomer and a lower traction layer by calendering and the subsequent addition of an upper traction layer, also by calendering; and

figure 5     shows schematically the production of a belt of the present invention by extrusion coating of a traction layer with a foamed coating layer.

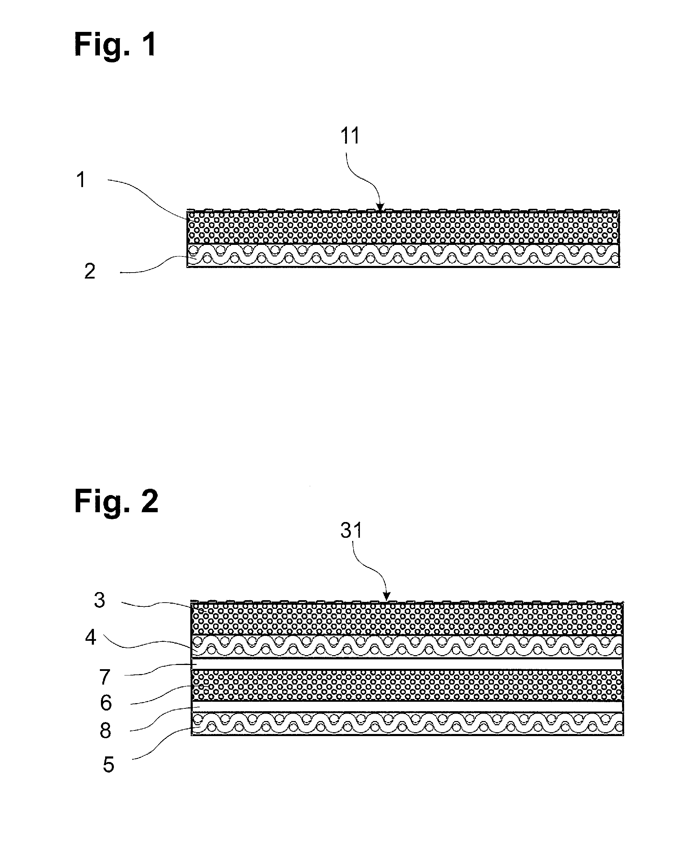

The belt of figure 1 includes a cover layer 1 of a foamed thermoplastic elastomer having Shore A hardness of 55 before foaming (blend of elastomer and thermoplastic polyurethane, Versollan™ RU 2204X-1). Its degree of foaming is about 20%, the foaming having been brought about by means of a physical blowing agent (Freon). The thickness of the cover layer 1 before embossing is about 0.6 mm. The cover layer 1 is arranged by extrusion coating on top of a traction layer 2 without use of any adhesive and is then embossed to give a profiled surface 11. The traction layer 2 consists of a woven polyester fabric having a twill weave, in which the warp threads are multifilaments of about 1100 dtex and the weft threads are monofilaments of 0.25 mm diameter. The thickness of the traction layer 2 is about 0.6 mm.

The belt of figure 2 includes a cover layer 3 of a foamed thermoplastic elastomer having Shore A hardness of 55 before foaming (Versollan™ RU 2204X-1). Its thickness is about 0.8 mm and its degree of foaming is about 20%, the foaming having been brought about by means of expandable microspheres. The foamed cover layer 3 is arranged on top of an upper traction layer 4 consisting of a plain-woven polyester fabric in which the warp threads are multifilaments of 1100 dtex and the weft threads are monofilaments of 0.25 mm diameter. The thickness of the upper traction layer 4 is about 0.6 mm. The belt also has a second, lower traction layer 5, consisting of a woven polyester fabric of the same construction and thickness as the upper traction layer 4. Sandwiched in between the two traction layers 4 and 5 is an intermediate layer 6 consisting of a foam with identical composition as in the cover layer 3 and having a thickness of about 1.0 mm. The upper traction layer 4 and the intermediate layer 6 are bonded together by means of an upper adhesive layer 7 and the intermediate layer 6 and the lower traction layer 5 are bonded together by means of a lower adhesive layer 8. Both adhesive layers 7 and 8 are of a thermoset polyurethane. The layered compound of upper traction layer 4, adhesive layer 7, intermediate layer 6, adhesive layer 8 and lower traction layer 5 is assembled together by calendering. The cover layer 3 is applied in a last step, again by extrusion coating, and is then embossed to yield the profiled surface 31.

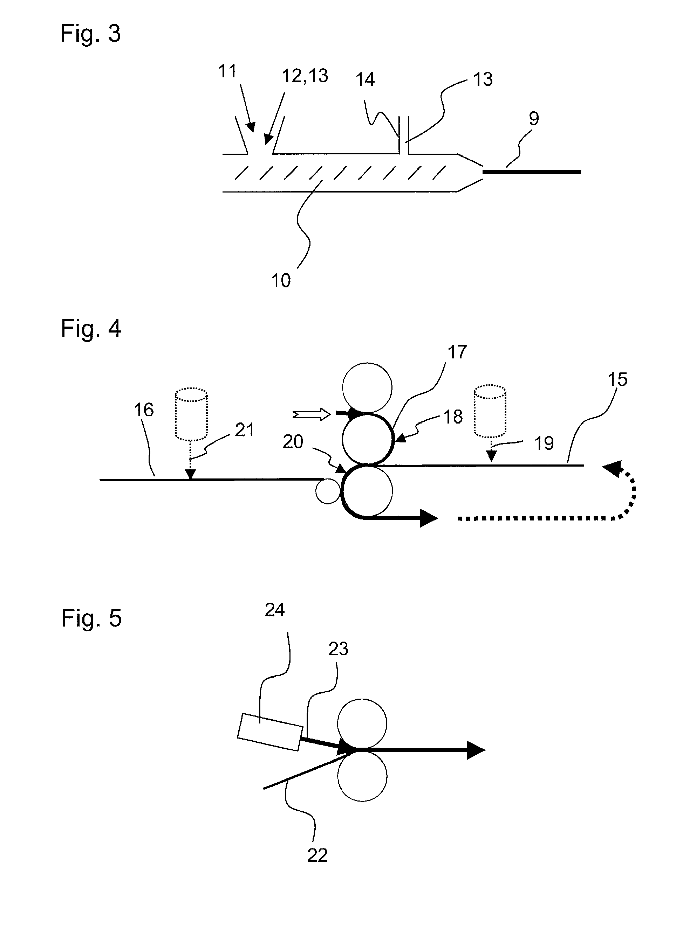

Figures 3-5 illustrate schematically the production of belts of the invention or of layered composites useful as intermediates of the belt of the invention.

Figure 3 shows the production of a thermoplastic elastomeric foam 9 itself in an extruder 10: The granulated or ground, still unfoamed thermoplastic elastomer 11 is mixed in the extruder 10 with optional further additives 12, such as for example dyes, fillers or flame inhibitors. When the blowing agent 13 is easy to meter, when it is solid for example, it can be added together with the thermoplastic elastomer 11 as one of the additives 12. When the blowing agent 13 is gaseous or liquid, it can be introduced into the extruder 10 directly and separately via a feed line 14. The mixture of all constituents is sufficiently heated and pressurized for the blowing agent to become commixed with the already molten mixture. In some cases, the commixing can be carried out such that the blowing agent is converted into the supercritical state, such as in particular when it is carbon dioxide. The resulting mixture of thermoplastic elastomer 11, additives 12 and blowing agent 13 is foamed up in the extruder 10 and removed from it, for example via a round die, as the foamed thermoplastic elastomer 9. When a slot die is used, the foam 9 can be shaped directly as a foamed thermoplastic elastomer layer.

Figure 4 shows schematically the production by calendering of a layered composite useful as an intermediate in the production of belts of the invention. Here, the layered composite has a lower traction layer 15 and an upper traction layer 16. In between these is calendered an intermediate layer 17, which may be a foamed thermoplastic elastomer layer or a conventional rubber or thermoplastic foamed or unfoamed layer. Initially, the lower traction layer 15 is calendered onto a bottom side 18 of the intermediate layer 17. If an additional adhesive is desired to bond the intermediate layer 17 and the lower traction layer 15 together, then it can be applied to the top side of the lower traction layer by sprinkling in the form of a pulverulent resin 19 or by spraying in the form of a solution in a solvent or by means of a doctor blade before the lower traction layer 15 enters the pair of rolls. An upper traction layer 16 is then calendered onto the top side 20 of the intermediate layer 17. Here too an additional adhesive 21 could optionally be sprinkled or sprayed onto the bottom side of the upper traction layer 16. The thick broken-lined arrow indicates that the layered composite can subsequently be coated with further layers, such as a foamed thermoplastic elastomer cover layer: In that case the already existing layered composite is fed to the calender from the right instead of the lower traction layer 15 and the further layer to be applied is fed from the left instead of the upper traction layer 16.

Figure 5 shows schematically an extrusion-coating of a layered composite intermediate 22, already comprising any required layers, with a cover layer of a foamed thermoplastic elastomer 23. Initially, the thermoplastic elastomer foam is produced and extruded from an extruder 24 similarly as described above for figure 3. The foam produced may already have the shape of a layer, in which case the extrusion is done with a slot die, or it may yet be of irregular shape, in which case the rolls serve also to impart the foam a layer shape while simultaneously adhering the cover layer to the layered composite intermediate 22.

## Claims

1. A belt comprising a foamed layer (1, 3, 6, 17, 23), **characterised in that** this foamed layer (1, 3, 6, 17, 23) contains a foam of a thermoplastic elastomer, which in the unfoamed state has a Shore A hardness of at the most 85.

2. The belt of claim 1, wherein the Shore A hardness is in the range of 45 to 70, preferably of 50 to 60.

3. The belt of claim 1 or 2, wherein the thermoplastic elastomer is selected from the group consisting of substantially random ethylene/$C_{3-12}$-$\alpha$-olefin copolymers, optionally blended with a compatible TPA or TPU and/or or a thermoplastic polyolefin; thermoplastic elastomeric block copolymers; blends of thermoplastics and elastomers; alloys of thermoplastics and elastomers; and thermoplastic elastomeric ionomers.

4. The belt of claim 3, wherein the thermoplastic elastomer is a substantially random ethylene/$C_{3-12}$-$\alpha$-olefin copolymer blended with a compatible TPU and optionally with a thermoplastic polyolefin.

5. The belt of one of claims 1 to 4, comprising a traction layer (2, 4) comprising a textile fabric or consisting thereof, and wherein the foamed layer is a cover layer (1, 3, 23) arranged on top of the traction layer (2, 4).

6. The belt of one of claims 1 to 4, comprising an upper traction layer (4, 16) comprising a textile fabric or consisting thereof, and a lower traction layer (5, 15) comprising a textile fabric or consisting thereof, and wherein the foamed layer is a cover layer (3) arranged on top of the upper traction layer (4) and/or an intermediate layer (6, 17) in between the upper traction layer (4, 16) and the lower traction layer (5, 15).

7. The belt of claim 5 or 6, wherein the textile fabrics contain fibres of a polyester and the thermoplastic elastomer of the foamed layer(s) (1, 3, 6, 17, 23) is a blend of a substantially random ethylene/$C_{3-12}$-$\alpha$-olefin copolymer and of a TPA or TPU, optionally further blended with a compatible thermoplastic polyolefin.

**8.** The belt of claim 7, wherein the $C_{3\text{-}12}$-$\alpha$-olefin is 1-octene.

**9.** The belt according to any one of claims 1 to 8, wherein the foamed layer(s) have a degree of foaming in the range of 5 to 60 percent and preferably in the range of 10 to 40 percent.

**10.** The belt of anyone of claims 1 to 9, having an overall thickness of 2.5 to 5.5 mm.

**11.** The belt according to any one of claims 1 to 10, which is a conveyor belt, a transport belt, a treadmill belt or a printing blanket.

# Fig. 1

# Fig. 2

Fig. 3

Fig. 4

Fig. 5

Europäisches
Patentamt

European
Patent Office

Office européen
des brevets

## EUROPEAN SEARCH REPORT

Application Number

EP 09 15 5128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/059194 A (ADVANCED ELASTOMER SYSTEMS [US]; ELLUL MARIA D [US]; SAHNOUNE ABDELHAD) 1 August 2002 (2002-08-01) | 1-3 | INV. B65G15/34 C08L23/16 |
| Y | * pages 2-4,8; tables 2,3 * | 4-8,11 | |
| X | WO 2005/028555 A (ADVANCED ELASTOMER SYSTEMS [US]; ELLUL MARIA [US]; CHENG JOHN [US]) 31 March 2005 (2005-03-31) * paragraphs [0003], [0018], [0024], [0034], [0062], [0063] * | 1-3 | |
| A | US 2007/083007 A1 (JACOB SUNNY [US]) 12 April 2007 (2007-04-12) * page 2; tables 2,4 * | 1-3 | |
| Y | WO 02/062682 A (HABASIT AG [CH]; CEDIEL LUIS E [CH]; HONOLD CLAUDIA [CH]; BRODMANN KUR) 15 August 2002 (2002-08-15) * pages 6,8; figure 1 * | 5 | |
| Y | EP 1 717 169 A (NITTA CORP [JP]) 2 November 2006 (2006-11-02) * column 4; figures 3,4 * | 4,6-8,11 | TECHNICAL FIELDS SEARCHED (IPC) B65G C08L |

The present search report has been drawn up for all claims

| Place of search | Date of completion of the search | Examiner |
|---|---|---|
| The Hague | 30 July 2009 | Müller, Joachim |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 09 15 5128

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2009

| Patent document cited in search report | | Publication date | Patent family member(s) | | Publication date |
|---|---|---|---|---|---|
| WO 02059194 | A | 01-08-2002 | AU | 2002228797 A1 | 06-08-2002 |
| | | | DE | 60108903 D1 | 17-03-2005 |
| | | | DE | 60108903 T2 | 13-04-2006 |
| | | | EP | 1353995 A2 | 22-10-2003 |
| | | | ES | 2233710 T3 | 16-06-2005 |
| | | | JP | 2004521173 T | 15-07-2004 |
| | | | US | 2003013813 A1 | 16-01-2003 |
| | | | US | 6433090 B1 | 13-08-2002 |
| WO 2005028555 | A | 31-03-2005 | CN | 1852946 A | 25-10-2006 |
| | | | EP | 1664189 A1 | 07-06-2006 |
| US 2007083007 | A1 | 12-04-2007 | EP | 1940943 A1 | 09-07-2008 |
| | | | JP | 2009511662 T | 19-03-2009 |
| | | | WO | 2007044123 A1 | 19-04-2007 |
| WO 02062682 | A | 15-08-2002 | AT | 273889 T | 15-09-2004 |
| | | | CA | 2435544 A1 | 15-08-2002 |
| | | | DE | 50200860 D1 | 23-09-2004 |
| | | | DK | 1355839 T3 | 13-12-2004 |
| | | | EP | 1355839 A1 | 29-10-2003 |
| | | | ES | 2227473 T3 | 01-04-2005 |
| | | | JP | 4109993 B2 | 02-07-2008 |
| | | | JP | 2004525045 T | 19-08-2004 |
| | | | US | 2004065529 A1 | 08-04-2004 |
| EP 1717169 | A | 02-11-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008113195 A
- US 5332080 A